(19) Europäisches Patentamt
European Patent Office
Office européen des brevets

(11) Publication number : **0 565 318 A1**

(12) **EUROPEAN PATENT APPLICATION**

(21) Application number : **93302621.3**

(51) Int. Cl.$^5$ : **C08L 83/04,** C08K 5/54

(22) Date of filing : **02.04.93**

(30) Priority : **10.04.92 JP 140907/92**

(43) Date of publication of application :
**13.10.93 Bulletin 93/41**

(84) Designated Contracting States :
**DE FR GB**

(71) Applicant : **Shin-Etsu Chemical Co., Ltd.**
**6-1, Otemachi 2-chome**
**Chiyoda-ku Tokyo 100 (JP)**

(72) Inventor : **Kimura, Tsuneo**
**3-12-37, Isobe**
**Annaka-shi, Gunma-ken (JP)**
Inventor : **Arai, Masatoshi**
**4-11-11, Isobe**
**Annaka-shi, Gunma-ken (JP)**

(74) Representative : **Whalley, Kevin et al**
**MARKS & CLERK 57/60 Lincoln's Inn Fields**
**London WC2A 3LS (GB)**

(54) **Room temperature curable organopolysiloxane compositions and process of making them.**

(57) Room-temperature curable organopolysiloxane compositions which comprise diorganopolysiloxane of which both molecular ends are blocked by hydroxyl groups, iminoxy silane compounds or their partially hydrolyzed products, organic tin catalysts, basic inorganic fillers such as metal carbonates, and alkenoxy silane expressed by the general chemical formulae below :

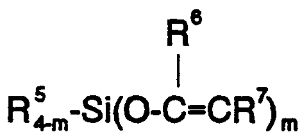

or

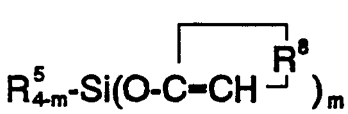

(wherein $R^5$ is a monovalent hydrocarbon group such as alkyl groups, $R^6$ and $R^7$, being the same or different, are each a hydrogen atom or a monovalent hydrocarbon group such as an alkyl group, $R^8$ is a bivalent hydrocarbon group such as an alkylene group, and m is either the number 3 or 4), or the partially hydrolyzed product of such an alkenoxy silane.

Room-temperature curable compositions of the condensation curing type with superior stability storage are obtained even when basic inorganic fillers are utilized for improving engine oil resistance and gear oil resistance.

EP 0 565 318 A1

This invention relates to room temperature curable organopolysiloxane compositions of a condensation curing type, especially to room temperature curable organopolysiloxane compositions having superior oil resistance and good stability during storage.

Oil resistant gaskets and packing materials made of cork, organic rubber, and asbestos were conventionally employed for sealing surfaces associated with automobile engines. Their disadvantages are a complication in their stock and process management and in their unreliable sealing performance.

For this reason, FIPG (Formed In Place Gaskets) materials made of room temperature curable silicon rubbers are now being employed in such applications. These FIPG materials are highly evaluated from the viewpoints of good workability, sealing performance, and heat resistance.

However, these FIPG materials contain basic inorganic fillers such as zinc oxide, zinc carbonate, magnesium oxide, and calcium carbonate as oil resistance enhancers. As a result, their contact with engine oil and gear oil does not degrade their rubber characteristics, but the presence of these basic inorganic fillers does result in insufficient stability during storage prior to curing.

Therefore, an object of this invention is to provide room temperature curable organopolysiloxane compositions which possess a superior stability during storage prior to curing, as well as superior oil resistance, and a process of making same.

Another object of this invention is to provide room temperature curable organopolysiloxane compositions which possess a superior stability during storage prior to curing, even though they still contain the basic inorganic fillers, and a process of making same.

Upon further study of the specification and appended claims, further objects and advantages of this invention will become apparent to those skilled in the art.

The invention provides room temperature curable organopolysiloxane compositions which comprise

(A) a diorganopolysiloxane in which both molecular ends are blocked by hydroxyl groups;

(B) an iminoxy silane expressed by the following general chemical formula (1) or formula (2):

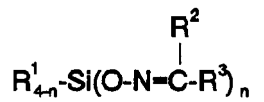

(1)

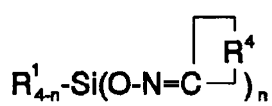

(2)

wherein

$R^1$ is an unsubstituted or substituted monovalent hydrocarbon group,

$R^2$ and $R^3$, being the same or different, are each a hydrogen atom or an unsubstituted or substituted monovalent hydrocarbon group,

$R^4$ is an unsubstituted or a substituted bivalent hydrocarbon group, and

n is either the number 3 or 4,

or a partially hydrolyzed product of an iminoxy silane of formula (1) or formula (2), the content of which is 1-25 parts by weight per 100 parts by weight of the component (A);

(C) an organic tin catalyst, the content of which is 0.01-10 parts by weight per 100 parts by weight of the component (A);

(D) a basic inorganic filler, the content of which is 1-500 parts by weight per 100 parts by weight of the component (A); and

(E) an alkenoxy silane expressed by the following general chemical formula (3) or formula (4):

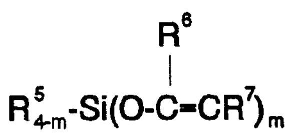

(3)

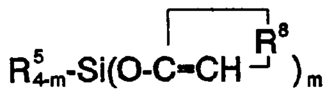 (4)

wherein

$R^5$ is an unsubstituted or substituted monovalent hydrocarbon group,

$R^6$ and $R^7$, being the same or different are each a hydrogen atom or an unsubstituted or substituted monovalent hydrocarbon group,

$R^8$ is an unsubstituted or substituted bivalent hydrocarbon group, and

m is either the number 3 or 4,

or a partially hydrolyzed product of an alkenoxy silane of formula (3) or formula (4), the content of which is 1-10 parts by weight per 100 parts by weight of component (A).

This invention also provides a method of manufacturing the room temperature curable organopolysiloxane compositions, characterized by the addition of component (E) after uniformly mixing components (A), (B), (C) and (D).

In this invention, component (E), the alkenoxy silane, functions as a preservation stabilizer.

The surfaces of basic inorganic fillers, component (D), are usually treated with various types of surface treatment agents in order to increase their dispersability with respect to polymer components. Therefore, functional groups such as hydroxyl, carbonyl, and carboxyl groups are bound to the surface of the basic inorganic fillers. These functional groups are considered to have an adverse effect on the curing reaction, which is a condensation reaction between the hydroxyl groups of component (A) and the iminoxyl groups of component (B), resulting in reduced stability during storage. In accordance with the invention, the later addition of alkenoxy silane, which possesses a particularly high reactivity, blocks the functional groups on the surface of the basic inorganic fillers and improves stability during storage.

In accordance with the invention, component (A), the base constituent, is a diorganopolysiloxane in which both molecular ends are blocked with hydroxyl groups. Such diorganopolysiloxanes are commonly utilized as a base component for room-temperature curable diorganopolysiloxane compositions of a condensation curing type, and those which possess a viscosity at 25°C in the range of 25-500,000 cSt, preferably 1,000-10,000 cSt, are preferably utilized since their workability is superior and they also provide the cured products with good rubber properties. Preferably, the diorganopolysiloxane utilized is expressed by the following general chemical formula (5) :

$$HO-(-\underset{R^9}{\overset{R^9}{\underset{|}{\overset{|}{Si}}}}O-)_n-H \qquad (5)$$

wherein $R^9$ is in each case an unsubstituted or a substituted monovalent hydrocarbon group, which can be the same or different, and n is an integer of at least 10, preferably 20-2,000. Preferably, group $R^9$ has up to 6 carbon atoms. For example, the monovalent hydrocarbon group $R^9$ can be an alkyl group such as methyl, ethyl and propyl groups; a cycloalkyl group such as cyclohexyl; an alkenyl group such as vinyl, allyl and isopropenyl groups; an aryl group such as phenyl and tolyl groups; an aralkyl group such as benzyl and phenyl ethyl groups; or one of the above groups in which at least a portion of the hydrogen atoms are replaced with halogen atoms, such as chloromethyl and 3,3,3-trifluoropropyl groups.

At least one iminoxy silane expressed by general chemical formula (1) or formula (2), or a partially hydrolyzed product thereof, is employed as component (B). As described above, component (B) functions as a crosslinking agent and the condensation of its iminoxyl group with a hydroxyl group of component (A) results in the cured products.

In the general formula (1) and formula (2), $R^1$ is an unsubstituted or substituted monovalent hydrocarbon group. Preferably, $R^1$ has up to 6 carbon atoms. Suitable examples are the same groups listed above as examples of group $R^9$. Further, $R^2$ and $R^3$, which can be the same or different, are each a hydrogen atom or a substituted or unsubstituted monovalent hydrocarbon group. Preferably, monovalent hydrocarbon $R^2$ and $R^3$ groups have up to 6 carbon atoms. Suitable monovalent hydrocarbon groups are the same as those listed above as examples of group $R^9$, alkyl groups being particularly desirable.

Further, $R^4$ is an unsubstituted or substituted bivalent hydrocarbon group which forms a ring along with the carbon atom bonded to the nitrogen atom. In general, alkylene groups are suitable as $R^4$. Preferably, $R^4$ has 3-6 carbon atoms.

The subscript n designates an integer of either 3 or 4.

According to the invention, iminoxy silanes expressed by general formula (1) include, for example, methyl-tri(butanone-oxime)silane, vinyl-tri(butanone-oxime)silane, phenyl-tri(butanone-oxime)silane, propyl-tri(butanone-oxime)silane,tetra(butanone-oxime)silane,3,3,3-trifluoropropyl(butanone-oxime)silane, 3-chloropropyl(butanone-oxime)silane, methyl-tri(propanone-oxime)silane, methyl-tri(pentanone-oxime)silane, and methyl-tri(iso-pentanone-oxime)silane.

Examples of iminoxy silane expressed by the general formula (2) are vinyl-(cyclopentanone-oxime)silane and methyl-tri(cyclohexanone-oxime)silane.

In accordance with the invention, 1-25 parts by weight of the iminoxy silanes, or their partially hydrolyzed products, are employed per 100 parts by weight of the component (A). Less than 1 part by weight of content leads to the gelation of the composition during the manufacturing process or during storage and the obtained cured products will not exhibit the desired elastic characteristics. Further, the employment of more than 25 parts by weight increases the contraction ratio of the composition during curing and lowers the elasticity of the cured products.

Organic tin catalysts, component (C), are utilized to promote the curing of components (A) and (B). Organic tin compounds conventionally utilized for condensation type curing silicon rubber compositions are suitable. For example, the organic tin catalyst can be an alkyl tin ester compound such as dibutyl tin acetate, dibutyl tin dilaurate, and dibutyl tin octanoate, and other organic tin compounds such as tin halide compounds and tin ortho-ester compounds. Alkyl tin esters are particularly desirable due to their reactivity and ease of handling.

These organic tin catalysts are employed at a ratio of 0.01-10 parts by weight, particularly 0.1-1 parts by weight per 100 parts by weight of component (A). If less than 0.01 parts by weight is employed, a longer time is required for formation of a tuck-free coating upon exposure of the composition to the air and the internal curing ability of the composition will also be reduced. Employment of more than 10 parts by weight makes the film-forming time extremely short, for example, several seconds, leading to reduced workability. Further, the heat resistance of the obtained cured products in this case is reduced.

Component (D), the basic inorganic filler, is utilized to improve the oil resistance, such as the engine oil resistance and the gear oil resistance, of the composition after being cured. Examples of suitable materials for component (D) are metal carbonates such as zinc carbonate, magnesium carbonate, manganese carbonate, and calcium carbonate, and metal oxides such as zinc oxide and magnesium oxide. The basic inorganic fillers can be used individually or in combinations thereof.

The amount of the basic inorganic fillers utilized is 1-500 parts by weight, particularly 5-100 parts by weight per 100 parts by weight of component (A). If less than 1 part by weight is employed, the composition does not exhibit increased resistance toward engine oil and gear oil. If more than 500 parts by weight are used, it will lead to insufficient rubber characteristics in the cured products.

The component (E) is either alkenoxy silanes expressed by general formula (3) or formula (4), or partially hydrolyzed products thereof. This component functions as a blocking agent for the surface functional groups of the basic inorganic fillers.

In the general formula (3) and formula (4), $R^5$ is either an unsubstituted or substituted monovalent hydrocarbon group. Preferably, $R^5$ has up to 6 carbon atoms. Suitable examples are the same groups listed above as examples of group $R^9$. Further, $R^6$ and $R^7$ are either hydrogen atoms or substituted or unsubstituted monovalent hydrocarbon groups, both of which can be the same or different. Preferably, monovalent hydrocarbon $R^6$ and $R^7$ groups have up to 6 carbon atoms. Suitable examples of such monovalent hydrocarbon groups are the same as those listed above as examples of group $R^9$, alkyl groups are particularly desirable.

Further, $R^8$ is an unsubstituted or substituted bivalent hydrocarbon group which forms a ring along with the two unsaturatedly bound carbon atoms. In general, alkylene groups are suitable as $R^8$. Preferably, $R^8$ has 3-6 carbon atoms.

The subscript m is either the number 3 or 4.

Examples of alkenoxy silane expressed by the general formula (3) are methyl-triisopropenoxy silane, vinyl-triisopropenoxy silane, phenyl-triisopropenoxy silane, dimethyl-diisopropenoxysilane,vinyl-methyl-diisopropenoxy silane, trimethyl-isopropenoxy silane, vinyl-dimethylisopropenoxy silane, and methyl-triisobutenone-oxime silane.

Further, an example of alkenoxy silane expressed by the general formula (4) is vinyl-tricyclohexanone-oxime silane.

These alkenoxy silanes are obtained easily through the hydrochloric acid elimination reaction between the corresponding various ketones and halogenized silane in the presence of an acid acceptor such as organic

amines, for example, triethyl-amine and dimethyl-aniline or metallic sodium.

In accordance with the invention, the alkenoxy silanes or their partially hydrolyzed products are employed at a ratio of 1-10 parts by weight per 100 parts by weight of component (A). Using less than 1 part by weight does not provide effective blockage of the surface functional groups on the basic inorganic fillers and, therefore, will not achieve the desired improved stability during storage in accordance with the invention. Further, the use of more than 10 parts by weight will lead to the obtained cured products exhibiting insufficient rubber characteristics.

The compositions of this invention comprise components (A) through (E) as essential components. However, various types of additives already known can be utilized as long as the oil resistance and stability during storage are not significantly degraded. Examples of such additives are reinforcing materials such as an aerosol silica, precipitated silica, titanium dioxide, aluminum oxide, quartz powder, talc, and bentonite; fibrous fillers such as asbestos, glass fibers, and organic fibers; agents to improve oil resistance such as calcium methacrylate; coloring agents such as pigments and dyes; agents to improve heat resistance such as red oxide and cerium oxide; thixotropy agents such as polyethers; desiccants; anti-rusting agents; adhesivity enhancers such as τ-amino-propyl-triethoxy silane; oil resistive adhesivity enhancers such as networked polysiloxane with triorganosiloxyl units and $SiO_2$ units. Appropriate amounts of these additives are mixed in as necessary.

Curable compositions of the invention are prepared by uniformly mixing together components (A) through (D) under a dry atmosphere, followed by addition of an appropriate amount of component (E). In this method, it is important that water and active OH groups in the system are blocked at first by reacting with component (B). Then, the functional groups of the basic fillers not blocked by the component (B) are blocked by component (E). Since alkenoxy silane possesses a higher reactivity toward active OH groups than iminoxy silane does, addition of the components (B) and (E) together or the reaction of the components (A) and (E) at first, for example, will consume component (E), leaving an insufficient amount of component (E) to block the functional groups of the basic fillers.

Mixing of each component is performed in accordance with known methods. For example, extruders such as a double-roll type or a kneader type are applicable. The mixture may be heated as necessary. Further, it is desirable to combine additives, which are mixed as desired, after the addition of component (E).

The obtained curable compositions of the invention are superior in oil resistance and in sealing performance.

Therefore, they are suitable FIPG materials. Further, they are also useful as sealing materials of machinery parts utilized in construction, electric, and electronic industries which employ lubrication oil.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever.

In the foregoing and in the following examples, all temperatures are set forth uncorrected in degrees Celsius and unless otherwise indicated, all parts and percentages are by weight.

The entire disclosure of all applications, patents and publications, cited above and below, and of corresponding Japanese application 4-140907, are hereby incorporated by reference.

## EXAMPLES

Below in the examples of this invention, all parts are expressed by parts by weight and viscosity measurements were carried out at 25°C.

### Comparison Example 1

A curable composition was prepared by mixing the following components under anhydrous conditions:

100 parts of dimethyl-polysiloxane of which both molecular ends are blocked with hydroxyl groups and having a viscosity of 5,200 cSt;

9.0 parts by vinyl-tributanone-oxime silane;

0.2 parts of dibutyl tin dioctanoate;

1.0 parts of τ-amino-propyl-triethoxy silane;

8.0 parts of co-hydrolyzed products of trimethylchlorosilane and tetrachlorosilane;

100 parts of zinc carbonate; and

20 parts of aerosol silica.

Using this composition, a 2 mm thick sheet was prepared and left under 20°C - 50% RH atmosphere for 7 days for curing. Rubber characteristics (initial physical properties) of the cured sheet were measured according to the method in JIS K 6301.

The cured sheet was submerged in 7.5 W-90 gear oil at 120°C for 240 hours. Its rubber characteristics were then measured by the JIS K 6301 method in order to evaluate its oil resistance.

Further, the following test was carried out in order to evaluate its oil resistive adhesivity. The composition was applied as a coating to a 25 x 10 mm area of a JIS-H-4000 aluminum sheet of 100 x 25 x 1 mm size, the surface of which was polished with sand paper prior to the coating operation. Then, a 1 mm thick Teflon® sheet was placed on the coated surface as a spacer. A similar aluminum sheet as above and a 500 g weight were further placed on top of this configuration. The layered sheet was left under 20°C - 50% RH atmosphere for 96 hours in order to cure the composition on the coating surface. After the cured sheet was submerged in 7.5 W-90 gear oil at 120°C for 240 hours, the adhesiveness under shearing was measured. The adhesiveness under shearing was also measured for the cured sheet prior to submerging in the gear oil and this value was evaluated as a part of initial physical properties.

The following tests were performed in order to evaluate the storage property. Samples of the curable composition which were prepared as above but without curing were left for 24, 144, and 240 hours under anhydrous conditions at 70°C. Then, a 2 mm thick sheet was prepared from each sample. The sheets were cured by leaving them under 20°C - 50% RH atmosphere for 7 days. Their rubber characteristics were measured.

All the results described above are summarized in Table 1.

## Example 1

A curable composition was prepared by mixing a 1.0 part of methyl triisopropenoxy silane into 100 parts of the curable composition prepared in Comparison Example 1 under anhydrous conditions.

This composition was tested for the initial physical properties of the cured sheet, oil resistance, oil resistive adhesivity, and storage property by the same methods described in Comparison Example 1. The results are summarized in Table 1.

## Example 2

A curable composition was prepared by the same method described in Example 1, except that vinyl triisopropenoxy silane (1.0 part) was employed instead of methyl triisopropenoxy silane. This composition was similarly tested for the initial physical properties of the cured sheet, oil resistance, oil resistive adhesivity, and storage property. The results are summarized in Table 1.

## Example 3

A curable composition was prepared by the same method described in Example 1, except that phenyl triisopropenoxy silane (1.0 part) was employed instead of methyl triisopropenoxy silane.

This composition was similarly tested for the initial physical properties of the cured sheet, oil resistance, oil resistive adhesivity, and storage property. The results are summarized in Table 1.

**TABLE 1**

| | Comparison Example 1 | Example 1 | Example 2 | Example 3 |
|---|---|---|---|---|
| Initial Physical Properties | | | | |
| Hardness (JIS A) | 55 | 57 | 60 | 58 |
| Tensile Strength (Kgf/cm$^2$) | 35 | 31 | 35 | 33 |
| Elongation (%) | 250 | 270 | 360 | 270 |
| Adhesiveness Under Shearing (Kgf/cm$^2$) | 15 | 14 | 12 | 10 |
| Submerged in Gear Oil | | | | |
| Hardness (JIS A) | 38 | 41 | 43 | 40 |
| Tensile Strength (Kgf/cm$^2$) | 17 | 18 | 20 | 21 |
| Elongation (%) | 160 | 180 | 210 | 200 |
| Adhesiveness Under Shearing (Kgf/cm$^2$) | 10 | 11 | 10 | 12 |
| Stored at 70°C for 72 hr. | | | | |
| Hardness (JIS A) | 46 | 55 | 57 | 52 |
| Tensile Strength (Kgf/cm$^2$) | 21 | 30 | 31 | 32 |
| Elongation (%) | 150 | 210 | 330 | 270 |
| Stored at 70°C for 144 hr. | | | | |
| Hardness (JIS A) | 38 | 52 | 55 | 52 |
| Tensile Strength (Kgf/cm$^2$) | 5 | 27 | 29 | 31 |
| Elongation (%) | 100 | 200 | 300 | 250 |
| Stored at 70°C for 240 hr. | | | | |
| Hardness (JIS A) | unmeasurable | 50 | 52 | 50 |
| Tensile Strength (Kgf/cm$^2$) | | 26 | 27 | 27 |
| Elongation (%) | | 220 | 280 | 210 |

Note: Hardness was measured by using the A model, spring-type tester of JIS K 6301 method.

## Comparison Example 2

A curable composition was prepared by mixing the following components under anhydrous conditions:

100 parts of dimethylpolysiloxane of which both molecular ends are blocked with hydroxyl groups and having a viscosity of 20,000 cSt;

9.0 parts by vinyl tributanone-oxime silane;

0.1 parts of dibutyl tin dilaurate;

2.0 parts of $\tau$-aminopropyl-triethoxy silane;

100 parts of zinc oxide; and

20 parts of aerosol silica.

Using this composition, a 2 mm thick sheet was prepared and was left under 20°C - 50% RH atmosphere for 7 days for curing. Rubber characteristics of the cured sheet and adhesiveness under shearing (initial physical properties) were measured as similarly described in Comparison Example 1.

Also, after leaving a sample of the curable composition, as prepared above but not yet cured, for 240 hours at 70°C under anhydrous conditions, the rubber characteristics of the cured sheet were measured similarly as above. The results are summarized in Table 2.

**Example 4**

A curable composition was prepared by mixing 1.0 part of vinyl triisopropenoxy silane into 100 parts of the curable composition prepared in Comparison Example 2 under anhydrous conditions.

This composition was tested for the initial physical properties of the cured sheet and storage property by the similar methods described in Comparison Example 2. The results are summarized in Table 2.

**Comparison Example 3**

A curable composition was prepared by the same method described in Comparison Example 2, except that 30 parts of magnesium oxide were employed instead of 60 parts of zinc oxide.

This composition was tested for the initial physical properties of the cured sheet and storage property similarly as in Comparison Example 2. The results are summarized in Table 2.

**Example 5**

A curable composition was prepared by mixing 1.0 part of vinyl-triisopropenoxy silane into the curable composition prepared in Comparison Example 3 under anhydrous conditions.

This composition was tested for the initial physical properties of the cured sheet and storage property similarly as in Comparison Example 2. The results are summarized in Table 2.

**TABLE 2**

| | Comparison Example 2 | Example 4 | Comparison Example 3 | Example 5 |
|---|---|---|---|---|
| Initial Physical Properties | | | | |
| Hardness (JIS A) | 60 | 62 | 45 | 47 |
| Tensile Strength (Kgf/$cm^2$) | 45 | 46 | 35 | 37 |
| Elongation (%) | 260 | 270 | 350 | 340 |
| Adhesiveness Under Shearing (Kgf/$cm^2$) | 18 | 20 | 15 | 16 |
| Stored at 70°C for 240 hr. | | | | |
| Hardness (JIS A) | | 60 | | 45 |
| Tensile Strength (Kgf/$cm^2$) | unmeasurable | 40 | unmeasurable | 32 |
| Elongation (%) | | 250 | | 300 |

As can be seen from the above results, the invention provides room-temperature curable compositions of a condensation curing type with superior stability during storage, even when basic inorganic fillers are utilized as oil resistance enhancers for improving oil resistances such as engine oil resistance and gear oil resistance.

The preceding examples can be repeated with similar success by substituting the generically or specifically described reactants and/or operating conditions of this invention for those used in the preceding examples.

From the foregoing description, one skilled in the art can easily ascertain the essential characteristics of this invention, and without departing from the spirit and scope thereof, can make various changes and modifications of the invention to adapt it to various usages and conditions.

**Claims**

1. A room temperature curable organopolysiloxane composition comprising:

(A) a diorganopolysiloxane in which both molecular ends are blocked by hydroxyl groups;
(B) an iminoxy silane of formulae (1) or (2):

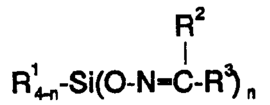

(1)

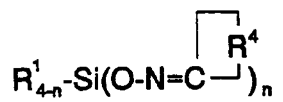

(2)

wherein

| | |
|---|---|
| $R^1$ | is an unsubstituted or substituted monovalent hydrocarbon group; |
| $R^2$ and $R^3$, | being the same or different, are each a hydrogen atom or an unsubstituted or substituted monovalent hydrocarbon group; |
| $R^4$ | is an unsubstituted or substituted bivalent hydrocarbon group; and |
| n | is either the number 3 or 4; or |

a partially hydrolyzed product thereof, the content of which is 1-25 parts by weight per 100 parts by weight of component (A);
(C) an organic tin catalyst, the content of which is 0.01-10 parts by weight per 100 parts by weight of component (A);
(D) a basic inorganic filler, the content of which is 1-500 parts by weight per 100 parts by weight of component (A); and
(E) an alkenoxy silane of formulae (3) or (4):

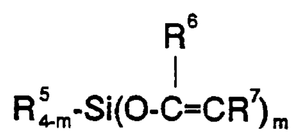

(3)

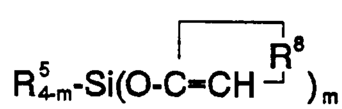

(4)

wherein

| | |
|---|---|
| $R^5$ | is an unsubstituted or substituted monovalent hydrocarbon group; |
| $R^6$ and $R^7$, | being the same or different, are each a hydrogen atom or an unsubstituted or substituted monovalent hydrocarbon group; |
| $R^8$ | is an unsubstituted or substituted bivalent hydrocarbon group; and |
| m | is either the number 3 or 4; or |

a partially hydrolyzed product thereof, the content of which is 1-10 parts by weight per 100 parts by weight of component (A).

**2.** A composition according to claim 1, wherein component (A) is a diorganopolysiloxane of formula (5)

$$HO-(-\overset{\overset{R^9}{|}}{\underset{\underset{R^9}{|}}{Si}}O-)_n-H$$

where in

$R^9$ is in each case an unsubstituted or a substituted monovalent hydrocarbon group, which can be the same or different, and

n is an integer of at least 10.

3. A composition according to claim 1, wherein
   - $R^1$ is alkyl, cycloalkyl, alkenyl, aryl or aralkyl,
   - $R^2$ is H, alkyl, cycloalkyl, alkenyl, aryl or aralkyl,
   - $R^3$ is H, alkyl, cycloalkyl, alkenyl, aryl or aralkyl,
   - $R^4$ is alkylene,
   - $R^5$ is alkyl, cycloalkyl, alkenyl, aryl or aralkyl,
   - $R^6$ is H, alkyl, cycloalkyl, alkenyl, aryl or aralkyl,
   - $R^7$ is H, alkyl, cycloalkyl, alkenyl, aryl or aralkyl, and
   - $R^8$ alkylene.

4. A composition according to claim 2, wherein
   - $R^1$ is alkyl, cycloalkyl, alkenyl, aryl or aralkyl,
   - $R^2$ is H, alkyl, cycloalkyl, alkenyl, aryl or aralkyl,
   - $R^3$ is H, alkyl, cycloalkyl, alkenyl, aryl or aralkyl,
   - $R^4$ is alkylene,
   - $R^5$ is alkyl, cycloalkyl, alkenyl, aryl or aralkyl,
   - $R^6$ is H, alkyl, cycloalkyl, alkenyl, aryl or aralkyl,
   - $R^7$ is H, alkyl, cycloalkyl, alkenyl, aryl or aralkyl,
   - $R^8$ alkylene, and
   - $R^9$ is alkyl, cycloalkyl, alkenyl, aryl or aralkyl.

5. A composition according to any of claims 1 to 4, wherein component (A) is a diorganopolysiloxane in which both molecular ends are blocked with hydroxy groups and which possesses a viscosity at 25°C of 1,000-10,000 cSt.

6. A composition according to any of claims 1 to 5, wherein said iminoxy silane component (B) is methyl-tri(butanone-oxime)silane, vinyl-tri(butanone-oxime)silane, phenyl-tri(butanone-oxime)silane,propyl-tri(butanone-oxime)silane,tetra(butanone-oxime)silane, 3,3,3-trifluoropropyl(butanone-oxime)silane, 3-chloropropyl(butanone-oxime)silane,methyltri(propanone-oxime)silane, methyl-tri(pentanone-oxime)silane, methyl-tri(iso-pentanone-oxime)silane, vinyl(cyclopentanone-oxime)silane or methyl-tri(cyclohexanone-oxime)silane.

7. A composition according to any of claims 1 to 6, wherein the content of component (C) is 0.1-1 parts by weight per 100 parts by weight of component (A).

8. A composition according to any of claims 1 to 7, wherein the content of component (D) is 5-100 parts by weight per 100 parts by weight of component (A).

9. A composition according to any of claims 1 to 8, wherein said alkenoxy silane component (E) is methyl-triisopropenoxy silane, vinyl-triisopropenoxy silane, phenyl-triisopropenoxy silane, dimethyl-diisopropenoxy silane, vinyl-methyl-diisopropenoxy silane, trimethyl-isopropenoxy silane, vinyldimethyl-isopropenoxy silane, methyl-triisobutenone-oxime silane, or vinyl-tricyclohexanone-oxime silane.

10. A method of preparing a room-temperature curable organopolysiloxane composition as claimed in any of claims 1 to 9, comprising

    uniformly mixing together components (A), (B), (C) and (D); and
    subsequently adding component (E).

European Patent Office

# EUROPEAN SEARCH REPORT

Application Number

EP 93 30 2621

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-5 064 898 (ARAI ET AL.)<br>* claims 1-6,8,10,11 *<br>* column 3, line 25 - column 5, line 14 *<br>* column 5, line 55 - column 6, line 23 *<br>* examples 1-6 *<br>--- | 1-10 | C08L83/04<br>C08K5/54 |
| X | US-A-5 039 735 (ARAI ET AL.)<br>* claims 1,2,4,5,8 *<br>* column 2, line 67 - column 3, line 66 *<br>* column 4, line 9 - column 5, line 1 *<br>--- | 1-9 | |
| A | EP-A-0 073 994 (BAYER AG)<br>* claims *<br>* page 2, line 1 - page 3, line 11 *<br>* page 5, line 12 - page 6, line 8 *<br>--- | 1,10 | |
| A | DE-A-2 335 569 (SHINETSU CHEMICAL CO.)<br>----- | | |
| | | | TECHNICAL FIELDS SEARCHED (Int. Cl.5) |
| | | | C08L<br>C08K |

The present search report has been drawn up for all claims

| Place of search | Date of completion of the search | Examiner |
|---|---|---|
| THE HAGUE | 18 JUNE 1993 | HOLLENDER C.J.F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)